# EUROPÄISCHE PATENTSCHRIFT

(11) **EP 3 263 397 B1**
(45) Veröffentlichungstag und Bekanntmachung des Hinweises auf die Patenterteilung: **11.03.2020**
(21) Anmeldenummer: 17175407.0
(22) Anmeldetag: 12.06.2017
(51) Int. Cl.: B60N 2/50, B60N 2/54

(54) **FEDERUNGSVORRICHTUNG**
SUSPENSION DEVICE
SYSTÈME DE SUSPENSION

(30) Priorität: 01.07.2016 DE 102016112118
(43) Veröffentlichungstag der Anmeldung: 03.01.2018
(73) Patentinhaber: GRAMMER AG, 92224 Amberg (DE)
(72) Erfinder: Schanderl, Florian, 92521 Schwarzenfeld (DE); Lorey, Konstantin, 92546 Schmidgaden (DE)
(74) Vertreter: Hannke, Christian

(56) Entgegenhaltungen:
- US-A- 4 714 227
- US-A- 5 324 095

## Beschreibung

Die Erfindung betrifft eine Federungsvorrichtung, insbesondere für einen Fahrzeugsitz, umfassend ein Federungsoberteil und ein Federungsunterteil, welche durch eine erste Verbindungsschwinge und eine zweite Verbindungsschwinge miteinander verbunden sind und die erste Verbindungsschwinge schwenkbar um eine erste Schwenkachse und die zweite Verbindungsschwinge um eine zweite Schwenkachse schwenkbar an dem Federungsunterteil angeordnet sind, wobei mindestens eine Federeinheit mittels eines ersten Endbereichs mit der ersten Verbindungsschwinge und mittels eines zweiten Endbereichs mit dem Federungsoberteil oder dem Federungsunterteil verbunden ist.

Es sind aus dem Stand der Technik derartige Federungsvorrichtungen für Fahrzeugsitze bekannt, wobei das Federungsoberteil, das Federungsunterteil und die Verbindungsschwinge als ein Parallelogramm angeordnet sind, wobei der erste Endbereich der Federeinheit direkt an der ersten Verbindungsschwinge angeordnet ist.

Wirkt nun eine Kraft auf den Fahrzeugsitz, beispielsweise dadurch, dass eine Person auf dem Sitz Platz nimmt oder während einer Schwingungseinleitung, so bewegt sich das Federungsoberteil relativ gegenüber dem Federungsunterteil. Ist das Parallelogramm bzw. die Parallelogrammfederung vollständig eingefedert, so befinden sich das Federungsoberteil und das Federungsunterteil annähernd auf der gleichen Höhe. Eine Rückstellung aus dieser Position in eine Ausgangslage ist hierbei nicht mehr möglich und wird daher mittels einer weiteren Feder bzw. einer Hilfsfeder, welche unabhängig von der Federungsvorrichtung ist, bewerkstelligt, indem die Hilfsfeder oder alternativ durch eine zusätzliche Verbindungsstrebe, welche zwischen der ersten und der zweiten Schwinge angeordnet ist, ein Drehmoment in einem Schwenkpunkt erzeugt, wodurch das Federungsoberteil in die Ausgangslage zurückgestellt werden kann.

Es ist demzufolge Aufgabe der vorliegenden Erfindung, eine Federungsvorrichtung bereitzustellen, mittels welcher auf eine zusätzliche Hilfsfeder und auf eine zusätzliche Strebe verzichtet werden kann.

Diese Aufgabe wird gemäß den Merkmalen des Patentanspruches 1 gelöst. Vorteilhafte Ausgestaltungen der Erfindung finden sich in den abhängigen Patentansprüchen.

Kerngedanke der Erfindung ist es, eine Federungsvorrichtung für einen Fahrzeugsitz bereitzustellen, umfassend ein Federungsoberteil und ein Federungsunterteil, welche durch eine erste Verbindungsschwinge und eine zweite Verbindungsschwinge miteinander verbunden sind und die erste Verbindungsschwinge schwenkbar um eine erste Schwenkachse und die zweite Verbindungsschwinge um eine zweite Schwenkachse schwenkbar an dem Federungsunterteil angeordnet sind, wobei mindestens eine Federeinheit mittels eines ersten Endbereichs mit der ersten Verbindungsschwinge und mittels eines zweiten Endbereichs mit dem Federungsoberteil oder dem Federungsunterteil verbunden ist, wobei der erste Endbereich der Federeinheit mit der ersten Verbindungsschwinge in einem ersten Abstand dazu verbunden ist und in einer Höhenrichtung gesehen die erste Schwenkachse oberhalb der zweiten Schwenkachse angeordnet ist.

Gemäß einer bevorzugen Ausführungsform ist die erste Verbindungsschwinge um eine dritte Schwenkachse und die zweite Verbindungsschwinge um eine vierte Schwenkachse schwenkbar mit dem Federungsoberteil verbunden.

Durch eine derartige Anordnung werden Drehmomente erzeugt, welche für eine Rückstellung des eingefederten Fahrzeugsitzes in seine Ausgangslage bzw. Grundstellung bzw. Grundposition genutzt werden können. Die entstehenden Drehmomente werden im Folgenden genauer dargestellt.

Dadurch, dass die Federeinheit mittels seines ersten Endbereichs mit der ersten Verbindungsschwinge in einem ersten Abstand und mittels seines zweiten Endbereichs mit dem Federungsoberteil oder dem Federungsunterteil verbunden ist, bildet sich ein Hebelarm, dessen Anordnung davon abhängig ist, ob die Federeinheit mittels des zweiten Endbereichs mit dem Federungsoberteil oder dem Federungsunterteil verbunden ist. Ist der zweite Endbereich der Federeinheit mit dem Federungsoberteil verbunden, so ist der Hebelarm zwischen der dritten Schwenkachse und dem ersten Endbereich ausgebildet. Ist hingegen der zweite Endbereich der Federeinheit mit dem Federungsunterteil verbunden, so ist der Hebelarm zwischen der ersten Schwenkachse und dem ersten Endbereich ausgebildet.

Im nachfolgenden ist von einer Verbindung des zweiten Endbereichs mit dem Federungsoberteil auszugehen, falls nicht anders angegeben. Bei einer Verbindung des zweiten Endbereichs mit dem Federungsunterteil ergeben sich die Zusammenhänge entsprechend.

Dadurch, dass durch die Anordnung des ersten Endbereichs der Federeinheit in dem ersten Abstand mit der ersten Verbindungsschwinge der Hebelarm ausgebildet ist, welcher sich von dem ersten Endbereich der Federeinheit zu dem dritten Schwenkpunkt erstreckt, wird bei einer Krafteinleitung von außen die Federeinheit verspannt, so dass durch die Federeinheit eine Kraft auf den Hebelarm wirkt, wodurch ein Drehmoment entsteht, welches der Richtung der äußeren Krafteinleitung entgegenwirkt, indem die erste Verbindungsschwinge um den ersten Schwenkpunkt verschwenkt wird.

Die hieraus resultierende Kraft erzeugt über einen theoretischen Hebelarm in dem zweiten Schwenkpunkt ein Drehmoment, wobei der theoretische Hebelarm sich von der zweiten Schwenkachse senkrecht zum Federungsoberteil erstreckt.

Dadurch, dass die erste Schwenkachse in Höhenrichtung gesehen oberhalb der zweiten Schwenkachse angeordnet ist, wird dieser theoretische Hebel in seiner Länge verlängert, wenn die Federungsvorrichtung vollständig eingefedert ist.

Durch die Anordnung der ersten Schwenkachse oberhalb der zweiten Schwenkachse in Höhenrichtung gesehen zwischen der ersten und der zweiten Schwenkachse ist ein zweiter Abstand ausgebildet. Der zweite Abstand entspricht einem minimalen Abstand zwischen dem Federungsoberteil und dem Federungsunterteil.

Durch das erzeugte Drehmoment durch den theoretischen Hebelarm und der Verlängerung dieses theoretischen Hebelarms durch die besondere Anordnung der ersten Schwenkachse zu der zweiten Schwenkachse ist dieses Drehmoment ausreichend für die Rückstellung der Federungsvorrichtung bzw. des Fahrzeugsitzes in seine Ausgangslage.

Erfindungsgemäß sind die erste Verbindungsschwinge parallel zu dem Federungsunterteil und die zweite Verbindungsschwinge nicht parallel zu dem Federungsunterteil ausgebildet, wenn der zweite Abstand dem minimalen Abstand entspricht.

Hierdurch wird eine gewisse Mindestlänge des theoretischen Hebelarms vorgegeben, welche notwendig ist, um die Federungsvorrichtung bzw. den Fahrzeugsitz wieder in die Ausgangslage zurückzustellen.

Gemäß einer besonders bevorzugten Ausführungsform ist der erste Abstand des ersten Endbereichs der Federeinheit zu der ersten Verbindungsschwinge mittels einer Einstellvorrichtung, welche mit der ersten Verbindungsschwinge einerseits und mit dem ersten Endbereich andererseits verbunden ist, einstellbar ist.

Insbesondere kann durch die Einstellung des ersten Abstandes auch der Hebelarm verändert werden, wodurch die Ausschubkraft bzw. die Federrate der Federeinheit veränderbar ist.

Gemäß einer weiteren bevorzugten Ausführungsform ist der erste Endbereich der Federeinheit mittels der Einstellvorrichtung mit der ersten Verbindungsschwinge verbunden.

Gemäß einer weiteren bevorzugten Ausführungsform sind eine Länge von der ersten Schwenkachse zu der dritten Schwenkachse und eine Länge von der zweiten Schwenkachse zu der vierten Schwenkachse identisch oder unterschiedlich.

Weiter bevorzugt ist es denkbar, den ersten Abstand zwischen der ersten und der zweiten Schwenkachse zu variieren und somit die Länge des theoretischen Hebels weiter zu beeinflussen. Es ist vorstellbar, dass die erste Schwenkachse in Höhenrichtung gesehen verlagert werden kann.

Hierdurch kann die Länge des theoretischen Hebels weiter verändert werden.

Gemäß einer weiteren bevorzugten Ausführungsform sind eine Länge von der ersten Schwenkachse zu der zweiten Schwenkachse und eine Länge von der dritten Schwenkachse zu der vierten Schwenkachse identisch.

Besonders vorteilhaft umfasst das Federungsoberteil einen Fahrzeugsitz, insbesondere einen Fahrzeugsitz mit einem Sitzteil und einer Rückenlehne.

Unter dem Begriff "Federeinheit" wird eine Einheit verstanden, die zumindest eine Zugfeder umfasst. Eine Federeinheit bzw. eine Feder kann mechanisch oder hydraulisch oder pneumatisch ausgestaltet sein. Vorteilhaft kann die Feder auch als die Federeinheit selbst verstanden werden. Durch eine mechanische Ausbildung kann das Gewicht der Federungsvorrichtung weiter reduziert werden und ein einfacherer Aufbau bereitgestellt werden.

Gemäß einer bevorzugten Ausführungsform umfasst die Federungsvorrichtung mehr als eine Federeinheit, also zusätzlich zu der ersten Federeinheit noch eine zweite, dritte, usw. Federeinheit, wobei jede Federeinheit mindestens eine Feder umfasst, so dass die Bauhöhe der Federungsvorrichtung hierdurch noch weiter reduziert werden kann, da eine auf die Federungsvorrichtung eingeleitete Kraft von zwei oder mehr Federn aufgenommen werden kann. Die Federn können also hierdurch kleiner dimensioniert werden. Besonders vorteilhaft ist es, zwei Federn für die Federungsvorrichtung vorzusehen. Es können aber auch eine beliebige Anzahl von Federn, insbesondere drei oder mehr, vorgesehen sein.

Gemäß einer weiteren bevorzugten Ausführungsform umfasst die Federeinheit eine erste und eine zweite Zugfeder.

Der erste und der zweite Endbereich der Federeinheit sind hierbei vorzugsweise das erste und das zweite Ende der Feder, wobei besonders bevorzugt das erste und/oder das zweite Ende der Feder eine Öse oder dergleichen aufweisen, so dass die Feder bzw. die Federeinheit leicht mit dazu vorgesehene Öffnungen oder Vorrichtungen verbunden, insbesondere eingehängt bzw. aufgehängt werden können.

Mittels einer Einstellung des ersten Abstandes des ersten Endbereichs der ersten Federeinheit und nicht mittels einer Veränderung der Federspannung der Federeinheit werden die Federrate und die Ausschubkraft der Federungsvorrichtung, also insbesondere der Feder, geändert.

Eine Einstellung ist hierbei gleichbedeutend mit einer Lageänderung der Federeinheit oder der Federeinheiten im Raum. Durch die Lageänderung der Federeinheit bzw. der Feder der Federeinheit wird ein an der Federeinheit angreifender Hebel in seiner Länge verändert.

Insbesondere wird dadurch der erste Endbereich relativ zu dem Federungsunterteil, welches vorzugsweise starr mit einem Boden, einer Karosserie oder dergleichen verbindbar ist, eingestellt. Der an der ersten Federeinheit angreifende Hebel erstreckt sich dabei von der ersten Verbindungsschwinge bis zu dem ersten Endbereich der Federeinheit. Durch Verstellung bzw. Verschieben des ersten Endbereichs der Federeinheit ist die Länge des Hebels veränderbar, so dass hierdurch die Federrate und die Ausschubkraft der Federungsvorrichtung veränderbar sind. Der erste Endbereich umfasst also entsprechend den Krafteinleitungspunkt der Federeinheit.

Die Ausschubkraft wird, wie bereits kurz angegeben, aufgrund des folgenden Zusammenhangs verändert. Wie bekannt ist, ist ein Drehmoment proportional zu der Länge eines Hebels, wenn die angreifende Kraft konstant ist. Durch Verstellung der Position des ersten Endbereichs wird die Länge des Hebels verändert. Sitzt ein verhältnismäßig schwerer Fahrer auf dem Fahrzeugsitz, der über die erfindungsgemäße Federungsvorrichtung verfügt, so muss der Hebel entsprechend länger sein als bei einem leichten Fahrer.

Dadurch, dass erfindungsgemäß nicht die Federspannung zur Veränderung der Ausschubkraft verändert wird, sondern nur die Lage der Federeinheit verändert wird, ist lediglich eine geringe Kraft seitens eines Benutzers notwendig, um die Ausschubkraft der Federungsvorrichtung zu verändern. Hierdurch wird auch eine sehr schnelle Verstellung der Ausschubkraft ermöglicht.

Weitere vorteilhafte Ausführungsformen ergeben sich aus den Unteransprüchen.

Weitere Ziele, Vorteile und Zweckmäßigkeiten der vorliegenden Erfindung sind der nachfolgenden von der Beschreibung in Verbindung mit der Zeichnung zu entnehmen. Hierbei zeigen:
- Fig. 1: perspektivische Ansicht eines Fahrzeugsitzes mit einer Federungsvorrichtung gemäß einer bevorzugten Ausführungsform;
- Fig. 2A: Vorderansicht des Fahrzeugsitzes gemäß Fig. 1;
- Fig. 2B: Schnitt entlang der Ebene A-A des Fahrzeugsitzes gemäß Fig. 2A;
- Fig. 3: schematische Darstellung der Federungsvorrichtung ohne besondere Anordnung der ersten und zweiten Schwenkachse in einer Ausgangsstellung;
- Fig. 4: schematische Darstellung der Federungsvorrichtung ohne besondere Anordnung der ersten und zweiten Schwenkachse in einer vollständig eingefederten Stellung;
- Fig. 5: schematische Darstellung der Federungsvorrichtung gemäß einer besonders bevorzugten Ausführungsform.

In den Figuren sind gleiche Bauteile jeweils mit den entsprechenden Bezugszeichen zu verstehen. Zur besseren Übersichtlichkeit können in manchen Figuren Bauteile nicht mit einem Bezugszeichen versehen sein, die jedoch an anderer Stelle bezeichnet worden sind.

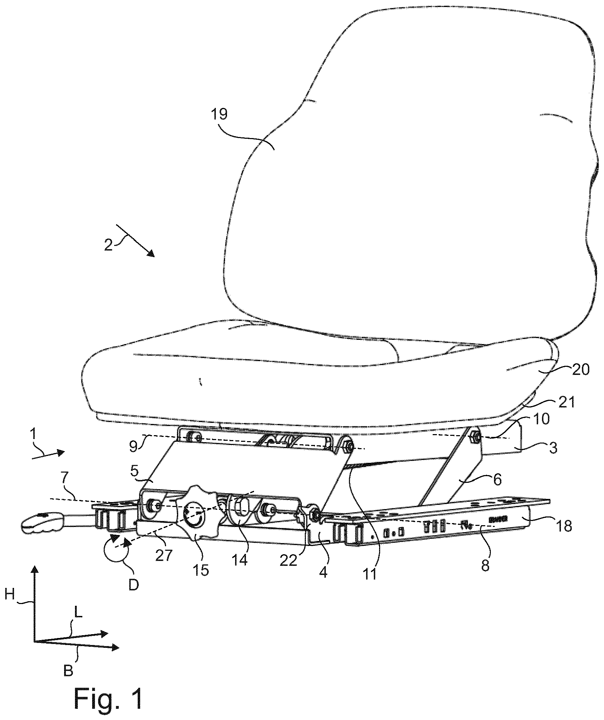

In der Figur 1 ist eine Federungsvorrichtung 1 für einen Fahrzeugsitz 2 gemäß einer bevorzugten Ausführungsform gezeigt. Die Federungsvorrichtung 1 ist hierbei zwischen einem Federungsoberteil 3 und einem Federungsunterteil 4 angeordnet, wobei das Federungsoberteil 3 eine Rückenlehne 19, eine Sitzfläche 20 und eine Sitzschale 21 aufweist. Das Federungsunterteil 4 ist hierbei mit einer Längsverstelleinrichtung 18 verbunden, so dass der insgesamte Fahrzeugsitz 2 in einer Längsrichtung L verschiebbar ist.

Wie weiter zu erkennen ist, sind das Federungsoberteil 3 und das Federungsunterteil 4 mittels einer ersten 5 und einer zweiten Verbindungsschwinge 6 miteinander verbunden, wobei die erste Verbindungsschwinge 5 um eine erste Schwenkachse 7 mit dem Federungsunterteil 4 und um eine dritte Schwenkachse 9 mit dem Federungsoberteil 3 schwenkbar verbunden ist. Die zweite Verbindungsschwinge 6 ist um eine zweite Schwenkachse 8 mit dem Federungsunterteil 4 und um eine vierte Schwenkachse 10 mit dem Federungsoberteil 3 schwenkbar verbunden.

Darüber hinaus ist erfindungsgemäß die erste Schwenkachse 7 in Höhenrichtung H gesehen oberhalb der zweiten Schwenkachse 8 angeordnet. Der Höhenunterschied, der zweite Abstand 17, wird in den nachfolgenden Bildern genauer gezeigt.

Weiter ist die Federeinheit 11 mittels einer Einstellvorrichtung 14 mit der ersten Verbindungsschwinge 5 verbunden, so dass der erste Endbereich 12 der Federeinheit 11 in einem ersten Abstand 16 dazu angeordnet ist. Dies wird in den nachstehenden Bildern noch einmal deutlicher dargestellt.

Die Einstellvorrichtung 14 ist vorliegend manuell mechanisch betätigbar mittels eines Betätigungselements 15, welcher drehbar um eine Drehachse 27 gelagert ist und mittels der Drehung D des Betätigungselements 15 der erste Abstand 16 veränderbar bzw. einstellbar ist, wodurch die Ausschubkraft bzw. die Federrate der Federeinheit 11 veränderbar ist.

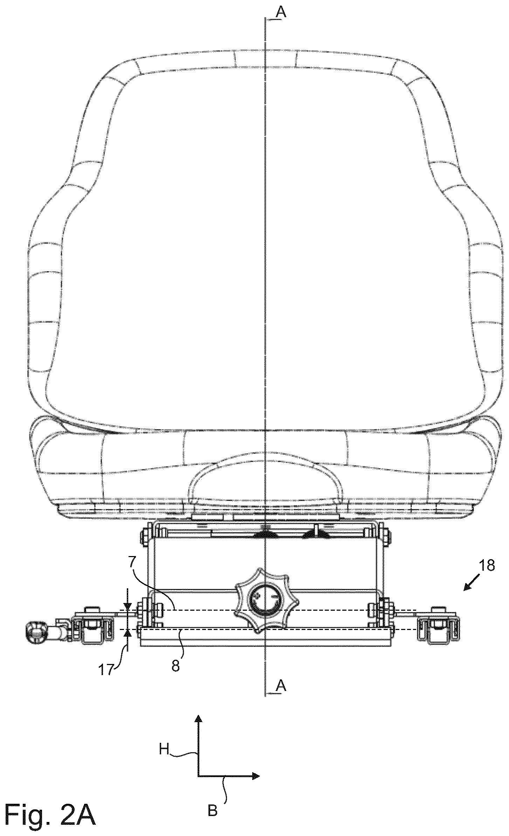

In der Figur 2A ist der Fahrzeugsitz 2 mit der Federungsvorrichtung 1 in einer Vorderansicht gezeigt. Hier wird auch nochmals der zweite Abstand 17 gezeigt, also der Höhenunterschied in Höhenrichtung H gesehen zwischen der ersten 7 und der zweiten Schwenkachse 8.

Vorzugsweise erstrecken sich die erste 7, zweite 8, dritte 9 und vierte Schwenkachse 10 in einer Breitenrichtung B des Fahrzeugsitzes 2.

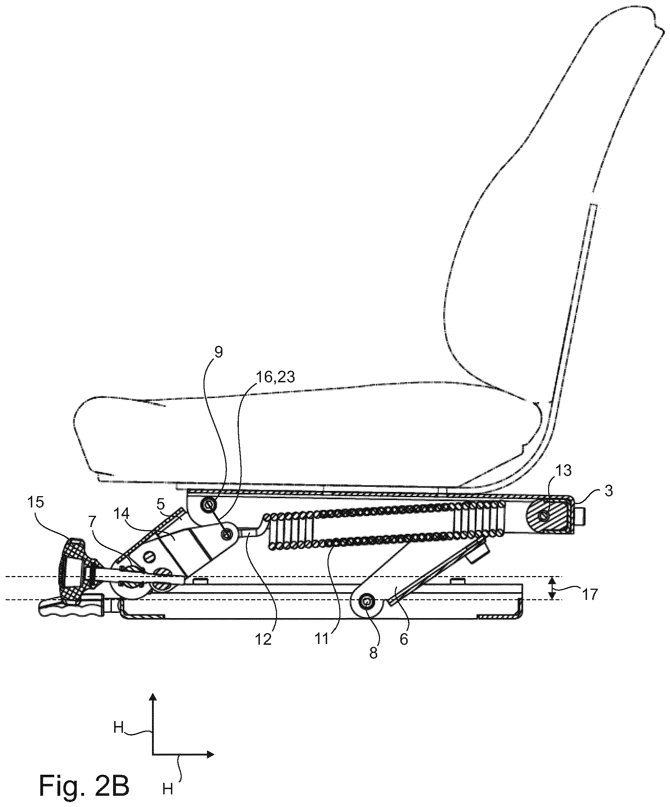

Die Figur 2B ist hierbei ein Schnitt entlang der Schnittebene A-A. Wie deutlich zu erkennen ist, ist die Federeinheit 11 mit seinem ersten Endbereich 12 mittels der Einstellvorrichtung 14 mit der ersten Verbindungsschwinge 5 verbunden und weist einen ersten Abstand 16 zu der ersten Verbindungsschwinge 5 auf. Der erste Abstand ist hierbei definiert als die Länge zwischen der dritten Schwenkachse 9 und dem ersten Endbereich 12. Natürlich sind hierbei noch andere Definitionen denkbar, beispielsweise die Länge der Senkrechten zu der ersten Verbindungsschwinge 5 und dem ersten Endbereich 12. Der zweite Endbereich 13 ist vorliegend mit dem Federungsoberteil 3 verbunden.

Der erste Abstand 16 ist hierbei gleichbedeutend mit dem Hebelarm 23, mittels welchem bei einer Krafteinleitung ein Drehmoment um die dritte Schwenkachse 9 erzeugt wird.

Die Vorteile der erfindungsgemäßen Anordnung der ersten Schwenkachse 7 zu der zweiten Schwenkachse 8 und des Abstandes 16 des ersten Endbereichs 12 der Federeinheit 11 wird mit Hilfe der nachfolgenden schematischen Figuren näher erklärt.

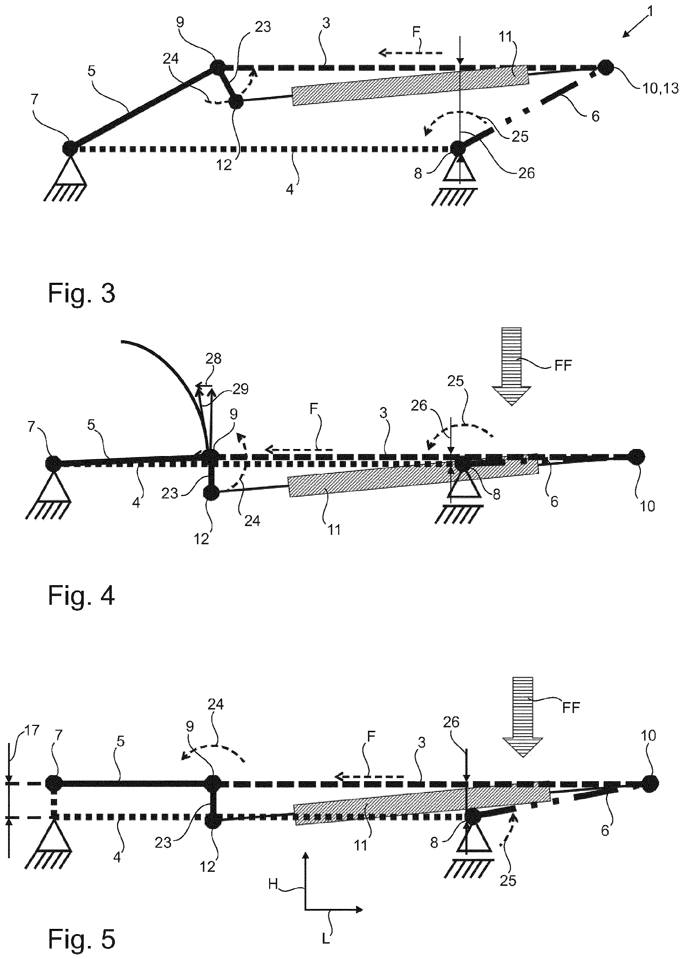

Die Figuren 3 und 4 zeigen hierbei eine Parallelogrammfederung mit einem Abstand 16 des ersten Endbereichs 12 von der ersten Verbindungsschwinge 5, jedoch ohne der Anordnung der ersten Schwenkachse 7 oberhalb der zweiten Schwenkachse 8, um die Notwendigkeit einer solchen Anordnung aufzuzeigen.

Die Figur 3 zeigt hierbei die Federungsvorrichtung 1, wobei mittels der Federeinheit 11 und dem Hebelarm 23 ein erstes Drehmoment 24 im Punkt 9 erzeugt wird, wodurch die erste Verbindungsschwinge 5 um die erste Schwenkachse 7 schwenkt.

Die wiederum hieraus resultierende Kraft F erzeugt dabei über einen theoretischen Hebel 26 ein zweites Drehmoment 25, so dass insgesamt das Federungsoberteil 3 von dem Federungsunterteil 4 weg bewegt wird.

Federt der Fahrzeugsitz 2 ein, also verringert sich durch eine äußere Krafteinwirkung FF, beispielsweise durch ein Daraufsetzen einer Person auf den Fahrzeugsitz 2, der Abstand zwischen dem Federungsoberteil 3 und dem Federungsunterteil 4, so befinden sich das Federungsoberteil 3 und das Federungsunterteil 4 in der vollständig eingefederten Stellung nahezu auf oder in einer gemeinsamen Ebene.

Die Federeinheit 11 erzeugt aufgrund des Hebelarms 23 weiterhin das erste Drehmoment 24. Jedoch ist in der eingefederten Stellung eine resultierende Bewegung 28 nach vorne gering, welche sich durch eine Vektorzerlegung der Bewegung der ersten Verbindungsschwinge 5, dargestellt durch den Tangentenvektor 29 der Verschwenkbewegung der ersten Verbindungsschwinge 5. Dadurch, dass die resultierende Bewegung 28 gering ist, ist auch die resultierende Kraft F geringer.

Das durch den theoretischen Hebel 26 und der resultierenden Kraft F erzeugte zweite Drehmoment 25 ist daher sehr gering, so dass das Federungsoberteil 3 lediglich durch das erste Drehmoment 24 von dem Federungsunterteil 4 weg bewegt wird. Wird vor allem der hintere Teil der Federungsvorrichtung 1 durch die Kraft FF belastet, ist das insgesamte Drehmoment, bestehend aus erstes 24 und zweites Drehmoment 25, nicht mehr ausreichend, das Federungsoberteil 3 von dem Federungsunterteil 4 weg zu bewegen. Ab einer bestimmten Länge des theoretischen Hebelarms 26 ist das erzeugte Drehmoment nicht mehr in der Lage, das Federungsoberteil 3 von dem Federungsunterteil 4 weg zu bewegen. Daher ist, wie aus dem Stand der Technik bekannt, der Einsatz einer Hilfsfeder notwendig und erforderlich.

Erfindungsgemäß ist es daher vorgeschlagen, die erste Schwenkachse 7 in Höhenrichtung H gesehen oberhalb der zweiten Schwenkachse 8 anzuordnen, wodurch eine gewisse Mindestlänge des theoretischen Hebels 26 vorgegeben ist. Dieser Sachverhalt wird in der Figur 5 näher dargestellt.

Wie der Figur 5 zu entnehmen ist, ist die erste Schwenkachse 7 in Höhenrichtung gesehen oberhalb der zweiten Schwenkachse 8 mit einem zweiten Abstand 17 angeordnet. Die Darstellung der Figur 5 entspricht einer vollständigen Einfederung des Fahrzeugsitzes 2 bzw. der Federungsvorrichtung 1, wobei in dieser Stellung die erste Verbindungsschwinge 5 parallel zu dem Federungsunterteil 4 angeordnet ist.

Dadurch wird eine gewisse Mindestlänge des theoretischen Hebels 26 vorgegeben, welche notwendig ist zur Erzeugung eines Mindestdrehmoments, mittels welcher der Fahrzeugsitz 2 bzw. die Federungsvorrichtung 1 wieder in die Ausgangslage zurückgebracht werden kann.

Das Drehmoment kann im Gebrauchsfall auch noch durch die Einstellung des Hebelarms 23 eingestellt werden.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Federungsvorrichtung
- 2: Fahrzeugsitz
- 3: Federungsoberteil
- 4: Federungsunterteil
- 5: erste Verbindungsschwinge
- 6: zweite Verbindungsschwinge
- 7: erste Schwenkachse
- 8: zweite Schwenkachse
- 9: dritte Schwenkachse
- 10: vierte Schwenkachse
- 11: Federeinheit
- 12: erster Endbereich der Federeinheit
- 13: zweiter Endbereich der Federeinheit
- 14: Einstellvorrichtung
- 15: Betätigungshebel
- 16: erster Abstand
- 17: zweiter Abstand
- 18: Längsverstelleinrichtung
- 19: Rückenlehne
- 20: Sitzfläche
- 21: Sitzschale
- 22: sich nach oben erstreckender Anteil
- 23: Hebelarm
- 24: erstes Drehmoment
- 25: zweites Drehmoment
- 26: theoretischer Hebelarm
- 27: Drehachse Betätigungselement
- 28: resultierende Bewegung nach vorne
- 29: Tangentenvektor
- F: resultierende Kraft
- H: Höhenrichtung
- L: Längsrichtung
- B: Breitenrichtung

## Patentansprüche

1. Federungsvorrichtung (1) für einen Fahrzeugsitz (2), umfassend ein Federungsoberteil (3) und ein Federungsunterteil (4), welche durch eine erste Verbindungsschwinge (5) und eine zweite Verbindungsschwinge (6) miteinander verbunden sind und die erste Verbindungsschwinge (5) schwenkbar um eine erste Schwenkachse (7) und die zweite Verbindungsschwinge (6) um eine zweite Schwenkachse (8) schwenkbar an dem Federungsunterteil (4) angeordnet sind, wobei mindestens eine Federeinheit (11) mittels eines ersten Endbereichs (12) mit der ersten Verbindungsschwinge (5) und mittels eines zweiten Endbereichs (13) mit dem Federungsoberteil (3) oder dem Federungsunterteil (4) verbunden ist, wobei
der erste Endbereich (12) der Federeinheit (11) mit der ersten Verbindungsschwinge (5) in einem ersten Abstand (16) dazu verbunden ist und in einer Höhenrichtung (H) gesehen die erste Schwenkachse (7) oberhalb der zweiten Schwenkachse (8) angeordnet ist,
**dadurch gekennzeichnet, dass**
durch die Anordnung der ersten Schwenkachse (7) oberhalb der zweiten Schwenkachse (8) in Höhenrichtung (H) gesehen zwischen der ersten (7) und der zweiten Schwenkachse (8) ein zweiter Abstand (17) ausgebildet ist, wobei der zweite Abstand (17) einem minimalen Abstand zwischen dem Federungsoberteil (3) und dem Federungsunterteil (4) entspricht, wobei die erste Verbindungsschwinge (5) parallel zu dem Federungsunterteil (4) und die zweite Verbindungsschwinge (6) nicht parallel zu dem Federungsunterteil (4) ausgebildet sind, wenn der zweite Abstand (17) dem minimalen Abstand entspricht, wobei die Federeinheit (11) zumindest eine Zugfeder umfasst.

2. Federungsvorrichtung (1) nach Anspuch 1,
**dadurch gekennzeichnet, dass**
der erste Abstand (16) des ersten Endbereichs (12) der Federeinheit (11) zu der ersten Verbindungsschwinge (5) mittels einer Einstellvorrichtung (14), welche mit der ersten Verbindungsschwinge (5) einerseits und mit dem ersten Endbereich (12) andererseits verbunden ist, einstellbar ist.

3. Federungsvorrichtung (1) nach einem der Ansprüche 1 oder 2,
**dadurch gekennzeichnet, dass**
der erste Endbereich (12) der Federeinheit (11) mittels der Einstellvorrichtung (14) starr mit der ersten Verbindungsschwinge (5) verbunden ist.

4. Federungsvorrichtung (1) nach einem der vorangegangenen Ansprüche,
**dadurch gekennzeichnet, dass**
die erste Verbindungsschwinge (5) um eine dritte Schwenkachse (9) und die zweite Verbindungsschwinge (6) um eine vierte Schwenkachse (10) schwenkbar mit dem Federungsoberteil (3) verbunden sind.

5. Federungsvorrichtung (1) nach Anspruch 4,
**dadurch gekennzeichnet, dass**
eine Länge von der ersten Schwenkachse (7) zu der dritten Schwenkachse (9) und eine Länge von der zweiten Schwenkachse (8) zu der vierten Schwenkachse (10) identisch oder unterschiedlich sind.

6. Federungsvorrichtung (1) nach Anspruch 4 oder 5,
**dadurch gekennzeichnet, dass**
eine Länge von der ersten Schwenkachse (7) zu der zweiten Schwenkachse (8) und eine Länge von der dritten Schwenkachse (9) zu der vierten Schwenkachse (10) identisch sind.

7. Federungsvorrichtung (1) nach einem der vorangegangenen Ansprüche,
**dadurch gekennzeichnet, dass**
die Federeinheit (11) eine erste und eine zweite Zugfeder umfasst.

## Claims

1. Suspension device (1) for a vehicle seat (2), comprising an upper suspension portion (3) and a lower suspension portion (4), said suspension portions being connected to one another by a first swivel connector (5) and a second swivel connector (6), said first swivel connector (5) being arranged on the lower suspension portion (4) in such a way that it can swivel about a first swivel axis (7) and the second swivel connector (6) being arranged on the lower suspension portion in such a way that it can swivel about a second swivel axis (8), at least one spring unit (11) being connected to the first swivel connector (5) by means of a first end region (12) and to the upper suspension portion (3) or the lower suspension portion (4) by means of a second end region (13), wherein the first end region (12) of the spring unit (11) is connected to the first swivel connector (5) at a first distance (16) from said connector, and the first swivel axis (7) is arranged above the second swivel axis (8) when viewed in the vertical direction (H),
**characterized in that**
by arranging the first swivel axis (7) above the second swivel axis (8) when viewed in the vertical direction (H), a second distance (17) is formed between the first (7) and second swivel axis (8), said second distance (17) corresponding to a minimum distance between the upper suspension portion (3) and the lower suspension portion (4), wherein if the second distance (17) corresponds to the minimum distance, the first swivel connector (5) is parallel to the lower suspension portion (4) and the second swivel connector (6) is not parallel to the lower suspension portion (4), wherein the spring unit (11) comprises at least one tension spring.

2. Suspension device (1) according to claim 1,
**characterised in that**
the first distance (16) between the first end region (12) of the spring unit (11) and the first swivel connector (5) can be adjusted by means of an adjustment device (14), which is connected to the first swivel connector (5) at one end and to the first end region (12) at the other end.

3. Suspension device (1) according to any of claims 1 or 2,
**characterised in that**
the first end region (12) of the spring unit (11) is rigidly connected to the first swivel connector (5) by means of the adjustment device (14).

4. Suspension device (1) according to any of the preceding claims,
**characterised in that**
the first swivel connector (5) is connected to the upper suspension portion (3) in such a way that it can swivel about a third swivel axis (9), and the second swivel connector (6) is connected to the upper suspension portion in such a way that it can swivel about a fourth swivel axis (10).

5. Suspension device (1) according to claim 4,
**characterised in that**
a length between the first swivel axis (7) and the third swivel axis (9) and a length between the second swivel axis (8) and the fourth swivel axis (10) are identical or different.

6. Suspension device (1) according to either claim 4 or 5,
**characterised in that**
a length between the first swivel axis (7) and the second swivel axis (8) and a length between the third swivel axis (9) and the fourth swivel axis (10) are identical.

7. Suspension device (1) according to any of the preceding claims,
**characterised in that**
the spring unit (11) comprises a first and second tension spring.

## Revendications

1. Dispositif de suspension (1) pour un siège de véhicule (2), comportant une partie supérieure de suspension (3) et une partie inférieure de suspension (4), lesquelles sont reliées l'une à l'autre au moyen d'un premier bras oscillant de liaison (5) et d'un second bras oscillant de liaison (6) et le premier bras oscillant de liaison (5) est disposé sur la partie inférieure de suspension (4) apte à pivoter autour d'un premier axe de pivotement (7) et le second bras oscillant de liaison (6) est disposé sur la partie inférieure de suspension (4) apte à pivoter autour d'un second axe de pivotement (8), dans lequel au moins une unité à ressort (11) est reliée au premier bras oscillant de liaison (5) au moyen d'une première région d'extrémité (12) et à la partie supérieure de suspension (3) ou à la partie inférieure de suspension (4) au moyen d'une seconde région d'extrémité (13), dans lequel
la première région d'extrémité (12) de l'unité à ressort (11) est reliée au premier bras oscillant de liaison (5) à une première distance (16) par rapport à celui-ci, et, vu dans une direction de la hauteur (H), le premier axe de pivotement (7) est disposé au-dessus du second axe de pivotement (8),
**caractérisé par le fait que**
par l'agencement du premier axe de pivotement (7) au-dessus du second axe de pivotement (8) vu dans la direction de la hauteur (H), une seconde distance (17) est formée entre le premier (7) et le second (8) axe de pivotement, dans lequel la seconde distance (17) correspond à une distance minimale entre la partie supérieure de suspension (3) et la partie inférieure de suspension (4), dans lequel le premier bras oscillant de liaison (5) est formé parallèle à la partie inférieure de suspension (4) et le second bras oscillant de liaison (6) est formé non parallèle à la partie inférieure de suspension (4), lorsque la seconde distance (17) correspond à la distance minimale, dans lequel l'unité à ressort (11) comporte au moins un ressort de traction.

2. Dispositif de suspension (1) selon la revendication 1,
**caractérisé par le fait que**
la première distance (16) de la première région d'extrémité (12) de l'unité à ressort (11) est réglable par rapport au premier bras oscillant de liaison (5) au moyen d'un dispositif de réglage (14), lequel est relié d'une part au premier bras oscillant de liaison (5) et d'autre part à la première région d'extrémité (12).

3. Dispositif de suspension (1) selon l'une des revendications 1 ou 2,
**caractérisé par le fait que**
la première région d'extrémité (12) de l'unité à ressort (11) est reliée de façon rigide au premier bras oscillant de liaison (5) au moyen du dispositif de réglage (14).

4. Dispositif de suspension (1) selon l'une des revendications précédentes,
**caractérisé par le fait que**
le premier bras oscillant de liaison (5) est relié à la partie supérieure de suspension (3) apte à pivoter autour d'un troisième axe de pivotement (9) et le second bras oscillant de liaison (6) est relié à la partie supérieure de suspension (3) apte à pivoter autour d'un quatrième axe de pivotement (10).

5. Dispositif de suspension (1) selon la revendication 4,
**caractérisé par le fait qu'**
une longueur du premier axe de pivotement (7) par rapport au troisième axe de pivotement (9) et une longueur du deuxième axe de pivotement (8) par rapport au quatrième axe de pivotement (10) sont identiques ou différentes.

6. Dispositif de suspension (1) selon l'une des revendications 4 ou 5,
**caractérisé par le fait qu'**
une longueur du premier axe de pivotement (7) par rapport au deuxième axe de pivotement (8) et une longueur du troisième axe de pivotement (9) par rapport au quatrième axe de pivotement (10) sont identiques.

7. Dispositif de suspension (1) selon l'une des revendications précédentes,
**caractérisé par le fait que**
l'unité à ressort (11) comporte un premier et un second ressort de traction.
